# EUROPEAN PATENT SPECIFICATION

(11) **EP 3 324 813 B1**
(45) Date of publication and mention of the grant of the patent: **17.04.2019**
(21) Application number: 16742218.7
(22) Date of filing: 15.07.2016
(51) Int. Cl.: A47L 15/42, A47L 15/50, B05D 7/02, B05D 5/00, C08J 7/04, C09D 165/00, F24C 15/10, F25D 21/14

(54) **HOUSEHOLD APPLIANCE COMPONENT COMPRISING A BASE ELEMENT WITH A FUNCTIONAL COATING**
HAUSHALTSGERÄTEKOMPONENTE MIT EINEM BASISELEMENT MIT EINER FUNKTIONALEN BESCHICHTUNG
COMPOSANT D'APPAREIL MÉNAGER COMPRENANT UN ÉLÉMENT DE BASE À REVÊTEMENT FONCTIONNEL

(30) Priority: 20.07.2015 ES 201531062
(43) Date of publication of application: 30.05.2018
(73) Proprietor: BSH Hausgeräte GmbH, 81739 München (DE)
(72) Inventor: ARTAL LAHOZ, Maria Carmen, 50007 Zaragoza (ES); BAYINDIR, Mehmet, Ankara (TR); BUNUEL MAGDALENA, Miguel Angel, 50017 Zaragoza (ES); CASTRO LAPETRA, Cristina, Zaragoza (ES); DAGLAR, Bihter, Ankara (TR); DISPINAR, Tugba, 34515 Istanbul (TR); MARTINEZ SOLANAS, Elena, 50015 Zaragoza (ES); SANZ NAVAL, Javier, 50193 Zaragoza (ES); YILDIRIM, Adem, Bilkent/Ankara 06800 Ankara (TR); YÜCEL, Murat, 59850 Tekirdag (TR); ÖKSÜZ, Dilara, Ankara (TR)
(86) International application number: PCT/EP2016/066893
(87) International publication number: WO 2017/013011

(56) References cited:
- WO-A1-2014/012052
- US-A- 5 882 739
- US-A1- 2005 170 179
- DATABASE WPI Week 201469 Thomson Scientific, London, GB; AN 2014-T21938 XP002762162, -& CN 103 965 294 A (CHINESE ACAD SCI CHEM INST) 6 August 2014 (2014-08-06)
- SONGFENG E ET AL: "Self-assembly and tribological properties of a novel organic-inorganic nanocomposite film on silicon using polydopamine as the adhesion layer", RSC ADVANCES: AN INTERNATIONAL JOURNAL TO FURTHER THE CHEMICAL SCIENCES, vol. 4, no. 2, 18 November 2013 (2013-11-18), pages 948-953, XP055304536, GB ISSN: 2046-2069, DOI: 10.1039/C3RA45293J
- DATABASE WPI Week 200418 Thomson Scientific, London, GB; AN 2004-184167 XP002762163, -& JP 2003 299606 A (NISSHIN STEEL CO LTD) 21 October 2003 (2003-10-21)

## Description

The invention relates to a household appliance component comprising a base element, wherein at least one surface of the base element is at least in some areas coated with a functional layer structure. The invention further relates to a method for coating a household appliance component and a household appliance.

Energy efficiency and cleanability are topics of increasing importance in all household appliances. In particular the drying performance is a key factor and consists of the removal of water present in the household appliance because of condensation of water onto different components of the household appliance during the use of the household appliance. Household appliance components usually comprise a base element, wherein at least one surface of the base element is at least in some areas coated with a functional layer structure to influence the condensation properties of the household appliance.

An enhancement of the condensation properties is generally desired in order to reduce the temperature, time, and energy required for a drying process in water using household appliances, for example in dishwashers, washing machines, and driers. In dishwashers consumer complaints focus on water stains which are formed on the dishes after the washing process. Further, a low wettability may also impair the cleanability of household appliances like cooktops, which are usually made of ceramic glass. Condensation related problems, which are described as "sweating" by customers, are for example also present in household refrigerators and freezers. This problem has various reasons, such as storing goods without a lid. Especially in humid regions of a refrigerator, condensed water droplets may form and drip onto food, thus causing shorter shelf lives. Condensation of water droplets on the surface of components like linings and inner walls may also affect the performance and energy consumption of a refrigerator or freezer.

However, currently known functional layer structures still exhibit a rather low performance with regard to avoiding such condensation related problems in household appliances.

The publication WO 2014/012052 A1 describes a method of preparing an article having a slippery surface, comprising: providing a metal-containing-surface; chemically modifying the metal-containing surface to roughen the metal-containing surface; and disposing a lubricating layer on the roughened metal-containing surface, wherein the lubricating layer is substantially stabilized on the roughened metal-containing surface. In an embodiment, the providing step comprises depositing a metal-containing thin film on an arbitrary substrate to form the metal-containing surface, further comprising pre-treating the substrate to improve adhesion of the substrate to the metal-containing sol-gel layer by applying dopamine or polydopamine as an adhesion promotor to the substrate.

The publication CN 103 965 294 A describes a method for screening a polypeptide fragment with antifreeze activity comprising a step of screening amino acid sequences of natural antifreeze protein, antifreeze protein or antifreeze glycoprotein or properly improving amino acid sequences of natural antifreeze protein, antifreeze protein or antifreeze glycoprotein. The antifreeze polymers are used also as coatings for surfaces, i.e. as surface modification of substrates with anti-freezing properties. To this end, the substrates are first treated with a reaction solution comprising dopamine, oxygen, and an alkaline buffer system. Subsequently, the thus obtained substrates are immersed in antifreeze peptide solutions. The surfaces thus treated can form part of cables or refrigerators.

The scientific paper "Self-assembly and tribological properties of a novel organic-inorganic nanocomposite film on silicon using polydopamine as the adhesion layer" by SONGFENG E ET AL, in RSC ADVANCES: AN INTERNATIONAL JOURNAL TO FRURTHER THE CHEMICAL SCIENCES, vol. 4, no. 2, pages 948-953, 2010, describes an organic-inorganic nanocomposite film on silicon wherein polydopamine is used as an adhesion layer. Ag₂O nanoparticles (NPs) were successfully assembled on a dual-layer film composed of a polydopamine outer layer and 3-aminopropytriethoxy silane (APS) sublayer, on silicon substrate. The dual-layer film is first of all formed on a silicon substrate, and the third layer with Ag₂O nanoparticles is formed shortly thereafter. The multilayer-structure films are considered to be useful for nano/microelectromechanical systems (NEMS/MEMS).

It is the task of the present invention to provide a household appliance component with better condensation properties of water. A further task of the invention consists in providing a method for coating a household appliance component with a functional layer structure having better condensation properties. Still further, it is an object of the current invention to provide a household appliance comprising at least one household appliance component with better condensation properties.

These tasks are solved by a household appliance component, a method for coating a household appliance component, a household appliance, and a use according to the independent claims. Advantageous developments of the invention are specified in the respective dependent claims, wherein advantageous developments of the household appliance component are to be regarded as advantageous developments of the method and the household appliance and vice versa.

A first aspect of the invention relates to a household appliance component comprising a base element, wherein at least one surface of the base element is at least in some areas coated with a functional layer structure, wherein the layer structure comprises at least one superhydrophilic layer containing polydopamine, wherein the functional layer structure comprises multiple layers, and wherein the polydopamine-containing superhydrophilic layer is a top layer of the layer structure. According to the invention, ameliorated condensation properties of the household appliance component are achieved in that the functional layer structure comprises at least one superhydrophilic layer which is the top layer and which contains or consists of polydopamine. Polydopamine (PDA) may for example be produced by the polymerization of dopamine and has surprisingly been found to be an excellent polymer for the formation of superhydrophilic layers. Although PDA is known as such, its structure is still under discussion. Generally, PDA is assumed to be composed of dihydroxyindole, indoledione, and dopamine units, which are assumed to be covalently linked according to the following structure:

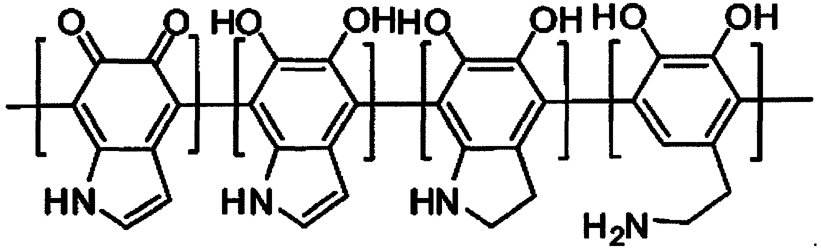

The superhydrophilic layer attracts water since water droplets and the like preferably settle on the superhydrophilic PDA-layer than on less hydrophilic or hydrophobic materials like plastic, metal, or ceramics. The superhydrophilic layer may act as a sink or catcher for water, thereby aiding in removing water from other less hydrophilic surfaces of the household appliance component. The term "superhydrophilic" within the scope of the present invention is generally understood to relate to layer having water contact angles of less than 25° and preferably of 2° or less. The household appliance component according to the invention has a very high water affinity and thus effectively prevents the condensation of water on uncoated areas, for example on dishes within a dishwasher. Thus, the functional layer structure effectively repels hydrophobic components like oil and food residue, thereby simplifying the cleaning process of different household appliance components, for example the glass surface of induction hobs and the like. On the other hand, hydrophilic components and in particular water are drawn to the superhydrophilic layer, leading to enhanced condensation properties and consequently to a reduction of the temperature required for drying of household appliances like dryers, washing machines, and dishwashers as well as to a reduction of the time required for the drying process. Thus, the energy consumption required for carrying out such a drying process as for example in dishwashers and dryers is reduced. Generally, the superhydrophilic layer may consist exclusively of PDA or may comprise one or more additional components. Further, the functional layer structure in its simplest configuration consists exclusively of the superhydrophilic layer. The surface of the base element may be coated only partly, i.e. in some areas. Further, the entire surface of the base element may be coated. Still further, the base element may comprise different layers or layer structures on different surface areas, wherein at least one of the layers is the superhydrophilic PDA-layer.

In an advantageous development of the invention, it is provided that the functional layer structure comprises multiple layers. This allows for a very precise adjustment of the physical, chemical, and mechanical properties of the functional layer structure. The functional layer structure may thus comprise 2, 3, 4, 5, 6, 7, or more individual layers. The layers generally may have different compositions. It may also be provided that some or all layers have the same composition. The thickness of the individual layers may be identical or different.

In a further advantageous development of the invention, the polydopamine-containing superhydrophilic layer is a top layer of the layer structure. In this way, the functional layer structure has particularly good condensation characteristics.

In a further advantageous development of the invention, it is provided that the layer structure comprises at least one further layer comprising at least one organically modified silicate (Ormosil). Organically modified silicate coatings show unique properties, standing between organic polymers and silica. They can be resistant against atmospheric conditions like silicas and flexible like polymers. They are not as brittle as silica coatings thanks to their flexibility and are very important for the production of durable coatings due to their exceptional mechanical properties. Another feature of Ormosil coatings is their good adherence to many different materials. Thus, they can be coated on various surfaces such as plastic materials (e.g. polystyrene or polypropylene), metals, glasses, silicon, paper, cardboard, stones, and wood without an additional binder. Ormosils may have very high water repellence and thus effectively prevent the condensation of water on the coated areas of the base element, for example on walls of a refrigerator. Further, the Ormosil-containing layer may function as a moisture barrier layer to protect the base element from water that is trapped by superhydrophilic PDA-layer. This enhancement of the condensation properties in some areas of a household appliance leads to a reduction of the temperature required for drying of household appliances like dryers, washing machines, and dishwashers as well as to a reduction of the time required for the drying process. Thus, the energy consumption required for carrying out such a drying process as for example in dishwashers and dryers is reduced. Alternatively or additionally Ormosils may have a very high water affinity and thus effectively prevent the condensation of water on uncoated areas, for example on dishes within a dishwasher. Thus, the coating also effectively repels hydrophobic components like oil and food residue, thereby simplifying the cleaning process of different household appliance components. The wettability or non-wettability of such coated surfaces is generally not affected by the material of the underlying substrate or the pH of the water. Further, Ormosil coatings are durable and stable, both mechanically and chemically. It may be provided that the at least one Ormosil is superhydrophobic. In that at least one Ormosil is superhydrophobic, condensation of water on the respective layer can be reduced or even completely avoided. According to the present invention, the term "superhydrophobic" relates to layers having water contact angles of at least 120° and preferably of 140° or more. Alternatively or additionally it is provided that the at least one Ormosil is superhydrophilic. The superhydrophilic Ormosil may also act as a sink or catcher for water, thereby aiding the PDA-layer in removing water from other less hydrophilic surfaces.

In a further advantageous development of the invention, it is provided that the Ormosil-containing layer is a base layer of the layer structure. In other words it is provided that the base element is coated with a layer that comprises or consists of one or more Ormosils. Because of the good adherence of Ormosils to many different materials, the superhydrophilic PDA-layer may be applied to different materials via the Ormosil-containing base layer even if the superhydrophilic PDA-layer would not stick well to the respective base material on its own.

According to the invention, it is provided that the household appliance component is configured as a lining or wall element of a household appliance. This allows for avoidance and/or improvement of water contact to such inner and/or outer walls of household appliance surfaces. Alternatively it is provided that the household appliance component is configured as a cooktop, in particular as a cooktop of at least one induction hob. In case of cooktops like induction hobs, ceramic glass cooktops and the like, the functional layer structure on the glass of induction hob reduces the adherence of oil and food residue, thereby simplifying the cleaning process of such cooktops giving them an easy cleaning property. Alternatively or additionally it is provided that the household appliance component is configured as a rack or basket of a dishwasher. In dishwashers, the customer complaints focus on the water stains which form on the dishes after washing process. Formation of such stains might mainly be related to water hardness. To eliminate these water stains, a coating of a rack and/or basket of the dishwasher may assist in binding water droplets on the rack/basket since the water droplets settle more on coated rack or basket and less on common materials of dishes (glass, steel, ceramic, etc.).

A second aspect of the invention relates to a method for coating a household appliance component, wherein at least one surface of a base element of the household appliance component is at least in some areas coated with a functional layer structure. According to the invention, the layer structure is formed with at least one superhydrophilic layer comprising polydopamine. Polydopamine (PDA) has a very high water affinity and thus effectively prevents the condensation of water on uncoated areas, for example on dishes within a dishwasher. On the other hand, the superhydrophilic layer effectively repels hydrophobic components like oil and food residue, thereby simplifying the cleaning process of different household appliance components. Furthermore, PDA can be directly coated on many materials that are commonly used for the manufacturing of base elements of household appliance components, for example on plastic materials (e.g. polystyrene or polypropylene), metals, glass, silicon, paper, cardboard, and stones. The wettability or non-wettability of such coated surfaces is generally not affected by the material of the underlying substrate or the pH of the water. Still further, PDA-containing coatings are durable and stable, both mechanically and chemically. The coating of the base element generally may consist of one or more PDAs. The at least one surface of a base element may be coated with a composition that comprises PDA together with one or more additional components. The surface of the base element may be coated only partly. Alternatively, the entire surface of the base element may be coated. Still further, the base element may be coated with different layer structures on different surface areas, wherein at least one of the layers comprises or consists of at least PDA. A variety of generally optional secondary immobilization reactions using the polydopamine layer as a base or "primer" may lead to various functional coatings, including grafted polymer coatings, metal films, and self-assembled monolayers. Further features and their advantages can be gathered from the description of the first aspect of the invention. Advantageous embodiments of the first aspect of the invention are to be regarded as advantageous embodiments of the second aspect of the invention and vice versa.

In an advantageous development of the invention, it is provided that the formation of the superhydrophilic layer comprises polymerization of at least one of dopamine, a dopamine salt, and a dopamine derivative to polydopamine. This allows for a fast and easy formation of the superhydrophilic layer on many different base materials. The polymerization reaction preferably is an oxidative polymerization.

In a further advantageous development of the invention, it is provided that the polymerization is carried out under aqueous conditions with a pH value being adjusted to at least 8.5. A pH value in the alkaline region advantageously accelerates the polymerization of dopamine, dopamine salts, and dopamine derivatives. Generally, higher pH values up to approximately 11 lead to faster reactions.

In a further advantageous development of the invention, it is provided that tris(hydroxymethyl)-aminomethane (TRIS) is used as a polymerization-promoting agent. TRIS accelerates the polymerization and assists in the preparation of very even and homogeneous layers.

In order to enhance the adhesion of the superhydrophilic PDA-layer on certain base element materials, it is further provided that the at least one surface of said base element is pre-treated, in particular plasma activated, before forming the superhydrophilic layer.

To enhance the adhesion of the superhydrophilic PDA-layer, it is provided in some embodiments of the invention that the at least one surface of said base element is coated with at least one organically modified silicate (Ormosil) containing layer before forming the superhydrophilic layer. In other words it is envisaged that in order to produce the functional layer structure an Ormosil-containing base-layer is first coated onto the base elements, followed by the superhydrophilic PDA-layer. Ormosils may have very high water repellence and thus effectively protect the base element from moisture. The Ormosil-containing base layer may be spray-coated onto the base element. Coatings generated by spray-coating exhibit excellent mechanical and chemical properties and are easy to apply to all commonly used base materials and shapes. Spray-coating further allows for low production costs.

In a further advantageous development of the invention, it is provided that the at least one Ormosil is first mixed with at least one plastic material and/or with at least one solvent, and wherein the mixture is subsequently spray-coated onto the at least one surface. Coatings must be mechanically stable and need to securely adhere to the base element during the lifetime of the household appliance component. Ormosil(s) may thus be mixed with plastic materials like granular polystyrene which functions as a binder. Alternatively or additionally, Ormosil(s) may be mixed with one or more solvents like ethanol, tetrahydrofuran and/or toluene to ease the coating of the base element for example by spray-coating. It may be provided that the at least one employed Ormosil is synthesized via a sol-gel process. The sol-gel process is a method for producing solid materials from small molecules and involves conversion of monomers into a colloidal solution (sol) that acts as the precursor for an integrated network (or gel) of either discrete particles or network polymers. In this chemical procedure, the 'sol' (or solution) gradually evolves towards the formation of a gel-like diphasic system containing both a liquid phase and solid phase whose morphologies range from discrete particles to continuous polymer networks. Gels according to the present invention may for example be produced by using methyltrimethoxysilane (MTMS) and phenyltrimethoxysilane (PTES) for superhydrophobic coatings and/or by using tetraethylorthosilicate for superhydrophilic coatings. Of course, different monomers and/or monomer mixtures may equally be used. The respective monomers may be dissolved in a solvent like ethanol and hydrolyzed at room temperature with an acidic catalyst (e. g. oxalic acid). The resulting compounds may then be polymerized using an alkaline catalyst (e. g. ammonium hydroxide), thereby forming a gel. It may further be provided that the formed Ormosil gel is aged for a predetermined period at a predetermined temperature before coating the at least one surface of the household appliance component. Aging leads to a change in the physical and chemical properties of the Ormosil gel. The aging process can be speeded up or slowed down by physical and/or chemical influences like lowered or increased temperature and/or pressure, oxygen, inert gas, moisture, light, ultraviolet radiation and the like. Formed Ormosil containing gels may for example be aged at room temperature for 1 to 3 days to improve their mechanical and chemical properties. It may further be provided that vibrations in the ultrasonic regime are applied to the at least one Ormosil before coating the at least one surface of the household appliance component. Due to cavitational shear forces by the application of ultrasound vibrations, the molecular weight of the Ormosil(s) is/are lowered by particle size reduction, resulting in a polydisperse colloidal solution. Multiphase systems are dispersed and emulsified very efficiently, so that very fine mixtures are prepared. The resulting "Sono-Ormosil(s)" exhibit a higher density as well as an improved thermal stability compared to Ormosils that were produced without the application of vibrations in the ultrasonic regime.

In a further advantageous development of the invention, it is provided that at least one layer of the functional layer structure is brought into contact with an organic solvent. This improves in some embodiments the adhesion of the layer(s) on the surface of the base element. The layer(s) may for example be dipped for a few seconds in an organic solvent like acetone. Alternatively or additionally, the organic solvent may be sprayed onto the layer or functional layer structure.

A third aspect of the invention relates to a household appliance comprising at least one household appliance component according to the first aspect of the invention and/or at least one household appliance component, which is at least in some areas coated by a method according to the second aspect of the invention. The resulting features and their advantages can be gathered from the description of the first and the second aspect of the invention.

A forth aspect of the invention relates to the use of polydopamine for forming a superhydrophilic layer at least in some areas of a base element of a household appliance component. The resulting features and their advantages can be gathered from the description of the first, second, and third aspect of the invention.

Further features of the invention appear from the claims as well as based on the following embodiments. The features and feature combinations mentioned above in the description as well as the features and feature combinations mentioned below in the embodiments are usable not only in the respective specified combination, but also in other combinations without departing from the scope of the invention. There are thus also variations of the invention possible that are not explicitly shown and described in the embodiments but can, however, be formulated through different combinations of separated features from the described embodiments.. In the following, embodiments of the invention are shown in more detail by referring to schematic drawings. These show in:
- Fig. 1: principle schematics of a method for coating a household appliance component with a functional layer structure;
- Fig. 2: a schematic sectional view of a first embodiment of the household appliance component with a functional layer structure; and
- Fig. 3: a schematic sectional view of a second embodiment of the household appliance component with a functional layer structure

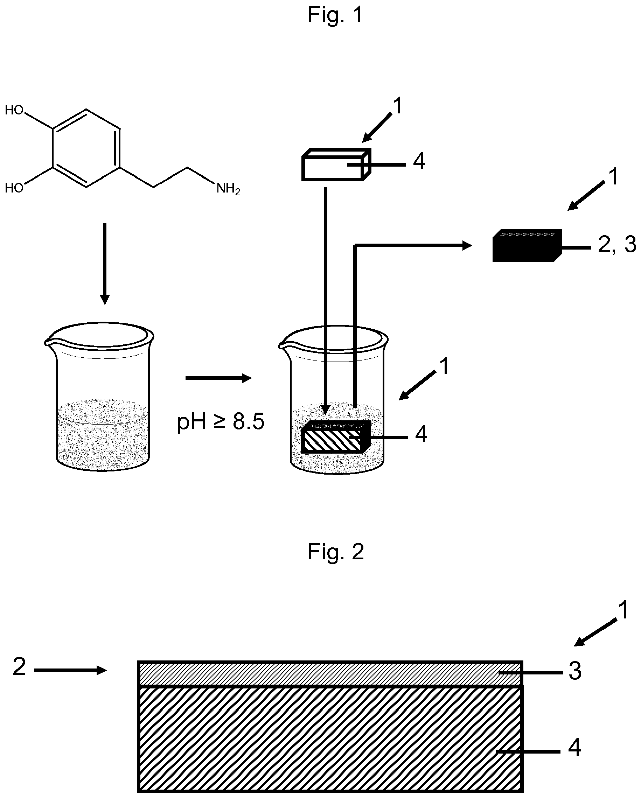

Fig. 1 shows principle schematics of a method for coating a household appliance component 1 with a functional layer structure 2, wherein the layer structure 2 is formed with one superhydrophilic layer 3 comprising polydopamine. In order to coat the household appliance component 1, a coating solution is prepared by dissolving 24 mg tris-(hydroxymethyl)aminomethane (TRIS) as a basic polymerization initiator in 20 ml of water (with or without stirring). Then, the pH of the solution is adjusted to a value of approximately 8.5 with appropriate amounts of HCl solution (1M). Higher pH values such as 10.5 are also possible since the polymerization usually proceeds faster. Following the pH adjustment, 4 mg of 3-hydroxytyramine hydrochloride (dopamine HCl) is added to the TRIS solution and the household appliance component 1 is immersed in the solution for 24 hours in an oxygen containing atmosphere. The household appliance component 1 consists of a base element 4 made of plastic or glass. The immersion time can be shorter, for example 1 hour, which also results in the formation of the superhydrophilic layer 3. Dopamine then undergoes an oxidative self-polymerization in the presence of TRIS to form an adherent polydopamine (PDA) layer 3 on the base element 4. The thickness of the resulting superhydrophilic PDA layer 3 is approximately 84 nm.

Superhydrophilic PDA layers 3 have several advantages. They can provide a biocompatible (nano)coating for material surfaces that would otherwise exhibit certain degrees of toxicity. PDA coatings are mechanically and chemically stable, durable and adhesion resistant. They may be easily prepared and ensure improved condensation properties for different kinds of household appliances. A variety of secondary immobilization reactions using the PDA layer 3 as a base or "primer" is possible and make various functional coatings possible, including grafted polymer coatings, metal films, and self-assembled monolayers.

In dishwashers, customer complaints focus on water stains which form on the dishes after the washing process. To eliminate these water stains household appliance components 1 like polypropylene racks and baskets comprising superhydrophilic PDA-layers 3 can be used. Thereby water droplets are formed on the superhydrophilic PDA-coating 3 rather than on the less hydrophilic material of dishes (glass, steel, ceramic, etc.)

In case of induction hobs or other cooktops, a superhydrophilic PDA layer 3 on the covering glass of the cooktop simplifies the cleaning process.

If the base element 4 is made of plastic material such as PP, it is recommendable to pre-activate its surface in order to enhance the adherence of the PDA layer 3. The base element 4 may be activated by applying plasma (O₂/N₂) to create micropores in the surface to increase the adhesion of the PDA layer 3. Corresponding examples and process parameters are given in table 1.

**Table 1**

| **Plasma** | **O₂ flow (cm³/min)** | **N₂ flow (cm³/min)** | **Pressure (torr)** | **T (°C)** | **Power (W)** | **Treatment time (min)** |
|---|---|---|---|---|---|---|
| O₂ | 10 | | 0.20 | 30 | 200 | 4 |
| O₂ | 10 | | 0.20 | 30 | 200 | 2 |
| N₂ | | 5 | 0.20 | 30 | 100 | 4 |
| N₂ | | 5 | 0.20 | 30 | 100 | 2 |

Additionally or alternatively, it is possible to spray a mixture of toluene:Ormosil (1:1 v/v) onto the base element 4 to create a primer coat for the following layer structure 2 (PDA layer 3).

In order to prepare Ormosils, suitable monomer(s) are diluted in ethanol or methanol and are hydrolyzed using oxalic acid as an acid catalyst. In a second step, a condensation reaction is initiated using ammonium hydroxide as base catalyst in order to form Ormosil gels (typically in 24 hours). After aging of the gels (e. g. 2 to 4 days) in order to strengthen the gel network, the gels may be sonificated to obtain Ormosil colloids. If the gels are prepared in methanol, the gels may be washed with ethanol before sonification in order to exchange the more toxic methanol with less toxic ethanol. Gels prepared in ethanol may be used directly without exchanging the solvent. The synthesis of Ormosils is described in more detail in the following. Some suitable Ormosils are given in table 2.

**Table 2**

| **Sample** | **Solvent** | **PTES:MTMS volume fraction (%)** |
|---|---|---|
| ME100se | 9.74 ml MeOH | 0:100 |
| Ph0 | 9.6 ml EtOH | 0:100 |
| Ph10 | 9.6 ml EtOH | 10:90 |
| Ph15 | 9.6 ml EtOH | 15:85 |
| Ph20 | 9.6 ml EtOH | 20:80 |
| pH25 | 9.6 ml EtOH | 25:75 |

### 1. Synthesis of Ormosil Gels

Ormosil gels with (nano)sized cavities that may be employed in the context of the present invention are obtained by a sol-gel method. Gels may be formed by using methyltrimethoxysilane (MTMS) and phenyltrimethoxysilane (PTES) for superhydrophobic coatings or by using tetraethylorthosilicate for superhydrophilic coatings. The respective monomer(s) is/are dissolved in ethanol (a safe solvent to use) and hydrolyzed at room temperature with an acidic catalyst (oxalic acid). The resulting compounds are then polymerized at room temperature using an alkaline catalyst (ammonium hydroxide) thereby forming a gel.

### 2. Preparation of Ormosil Colloids

The thus formed gels are aged at room temperature for 1 to 3 days. The aged gels are diluted with ethanol and then broken up by sonification using ultrasonic vibrations which results in a colloidal solution. The ultrasonic vibrations can be produced by an ultrasonic bath or an ultrasonic probe.

### 3. Preparation and Characterization of the Coatings

Organically modified silicate coatings show unique properties, standing between organic polymers and silica. They are resistant against atmospheric conditions like silicas and flexible like polymers. They are not as brittle as silica coatings thanks to their flexibility and are ideal for the production of durable coatings due to their exceptional mechanical and chemical properties. Another feature of Ormosil coatings is their good adherence to many different surfaces. Thus, they can be coated on various surfaces such as plastics, metals, glasses or wood, without an additional binder. Thus, Ormosils are excellent base layers 5 for superhydrophilic PDA layers 3.

Coatings and layer structures 2 must generally be mechanically stable in order to securely adhere to the respective base element. Ormosil gels, that are prepared according to the above-described method, are mixed with granular polystyrene and tetrahydrofuran and then applied onto a household appliance component 1 using spray-coating. The household appliance component 1 may be an inner liner for a refrigerator and comprise a base element made of polystyrene or another suitable plastic material. The coated household appliance component 1 is then dipped into acetone to improve the adhesion of the Ormosil containing base layer 5. After these steps, several tests are conducted to examine the adhesion and mechanical properties of the base layer 5.

### 3.1. Examination of Adhesion and Mechanical Properties of the Coatings

### • Band Test:

Adhesion properties are examined using a band. In this test, the band is applied onto the surface of the household appliance component with a specified pressure. The properties of the coating are examined after the band is removed.

### • Scratch Test:

The coating's durability against scratches is tested by using a metal stick. The effect of the scratching is examined by measuring the water contact angle in the area where the stick was used to scratch the coating.

### • Abrasion Test:

This test is used to determine the coating's durability against wiping and pressure. A test apparatus, weighing 120 grams, is wrapped in a damp cloth and moved on the surface of the coating with a predetermined speed and time. After the test, the properties and morphology of the coating are examined.

### • Chemical Stability Test:

To test the coating's stability against aggressive chemicals, various solutions with different concentrations are prepared and applied onto the coating. The solutions are designed to mimic the chemical properties of common foods such as vinegar, lemon or milk etc. Also, to test the durability against commonly used cleaners, compounds like dishwashing soap, fat solvent and caustic soda were used for testing. The water contact angles within the areas of the coating that were subjected to these solutions are measured to determine the chemical stability.

### 4. Testing of Anti-Condensation Properties:

To examine the anti-condensation property of a superhydrophobic coating, the coated household appliance component 1 is treated with water vapour for a predetermined time (e. g. 10 minutes). Afterwards, the amount of water that remains on the coating is measured. Also, the performance of the coating is determined by measuring water contact angles if there are any remaining droplets.

Fig. 2 shows a schematic sectional view of a household appliance component 1 which is not according to the invention. The household appliance component 1 comprises a base element 4 made of glass with a functional layer structure 2, wherein the layer structure 5 consists of a single superhydrophilic PDA layer 3.

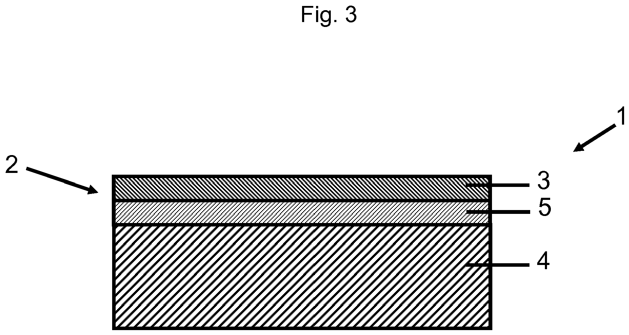

Fig. 3 shows a schematic sectional view of an embodiment of the household appliance component 1. The household appliance component 1 comprises a base element 4 made of polypropylene (PP) with a functional layer structure 2, wherein the layer structure 2 consists of a superhydrophobic Ormosil layer 5 and a superhydrophilic PDA layer 3. The Ormosil layer 5 is thus the base layer of the layer structure 2, while the PDA layer 3 is the top layer.

It will be understood by those skilled in the art that while the present invention has been disclosed above with reference to preferred embodiments, various modifications, changes and additions can be made to the foregoing invention, without departing from the spirit and scope thereof. The parameter values used in the claims and the description for defining process and measurement conditions for the characterization of specific properties of the invention are also encompassed within the scope of deviations, for example due to measurement errors, system errors, weighing errors, DIN tolerances and the like.

## Claims

1. A household appliance component (1) comprising a base element (4), wherein at least one surface of the base element (4) is at least in some areas coated with a functional layer structure (2), wherein the functional layer structure (2) comprises at least one superhydrophilic layer (3) containing polydopamine (PDA), wherein the functional layer (2) structure comprises multiple layers (3, 5), and wherein the polydopamine-containing superhydrophilic layer (3) is a top layer of the layer structure (2), **characterized in that** the household appliance component (1) is configured as a lining or wall element of a household appliance or as a cooktop or as a rack or basket of a dishwasher.

2. The household appliance component (1) according to claim 1, wherein the layer structure (2) comprises at least one further layer (5) comprising at least one organically modified silicate (Ormosil).

3. The household appliance component (1) according to claim 2, wherein the Ormosil-containing layer (5) is a base layer of the layer structure (2).

## Patentansprüche

1. Bestandteil (1) für ein Haushaltsgerät mit einem Grundelement (4), wobei mindestens eine Fläche des Grundelements (4) zumindest in einigen Bereichen mit einer Funktionsschichtkonstruktion (2) beschichtet ist, wobei die Funktionsschichtkonstruktion (2) mindestens eine superhydrophile Schicht (3) umfasst, die Polydopamin (PDA) enthält, wobei die Funktionsschichtkonstruktion (2) mehrere Schichten (3, 5) umfasst und es sich bei der polydopaminhaltigen superhydrophilen Schicht (3) um eine oberste Schicht der Schichtkonstruktion (2) handelt, **dadurch gekennzeichnet, dass** der Bestandteil (1) für ein Haushaltsgerät als Auskleidung oder Wandelement eines Haushaltsgeräts oder als Herdplatte oder als Ablage oder Korb eines Geschirrspülers konfiguriert ist.

2. Bestandteil (1) für ein Haushaltsgerät nach Anspruch 1, wobei die Schichtkonstruktion (2) mindestens eine weitere Schicht (5) mit mindestens einem organisch modifizierten Silicat (Ormosil) umfasst.

3. Bestandteil (1) für ein Haushaltsgerät nach Anspruch 2, wobei es sich bei der ormosilhaltigen Schicht (5) um eine Grundschicht der Schichtkonstruktion (2) handelt.

## Revendications

1. Composant d'appareil électroménager (1) comprenant un élément de base (4), dans lequel au moins une surface de l'élément de base (4) est au moins dans certaines zones revêtue d'une structure à couches fonctionnelle (2), dans lequel la structure à couches fonctionnelle (2) comprend au moins une couche super hydrophile (3) contenant de la polydopamine (PDA), dans lequel la structure à couches fonctionnelle (2) comprend de multiples couches (3, 5), et dans lequel la couche super hydrophile contenant de la polydopamine (3) est une couche supérieure de la structure à couches (2), **caractérisé en ce que** le composant d'appareil électroménager (1) est configuré en tant que doublure ou élément de paroi d'un appareil électroménager ou en tant que surface de cuisson ou en tant que grille ou panier d'un lave-vaisselle.

2. Composant d'appareil électroménager (1) selon la revendication 1, dans lequel la structure à couches (2) comprend au moins une couche supplémentaire (5) comprenant au moins un silicate modifié de manière organique (ormosil).

3. Composant d'appareil électroménager (1) selon la revendication 2, dans lequel la couche contenant de l'ormosil (5) est une couche de base de la structure à couches (2).
